**Europäisches Patentamt**

**European Patent Office**

**Office européen des brevets**

(19)

(11) Numéro de publication: **0 058 609**
**B1**

(12) **FASCICULE DE BREVET EUROPEEN**

(45) Date de publication du fascicule du brevet:
19.09.84

(51) Int. Cl.³: **H 02 P 5/16**

(21) Numéro de dépôt: **82400240.6**

(22) Date de dépôt: **10.02.82**

(54) **Procédé pour régler l'alimentation d'un moteur à courant continu et dispositif pour sa mise en oeuvre.**

(30) Priorité: **11.02.81 FR 8102693**

(43) Date de publication de la demande:
**25.08.82 Bulletin 82/34**

(45) Mention de la délivrance du brevet:
**19.09.84 Bulletin 84/38**

(84) Etats contractants désignés:
**AT BE CH DE GB IT LI LU NL SE**

(56) Documents cités:
**FR - A - 2 185 889**
**US - A - 3 295 316**
**US - A - 3 694 720**

**ELEKTRONIK, volume 26, no. 5, mai 1977 MUNICH (DE)**
**H.W. LUTJENS "Schaltregler mit hochspannungsfestem Transistor für Permanentmagnet-Motoren" pages 73 à 77**

(73) Titulaire: **FAIVELEY ENTREPRISES, 93, rue du Docteur-Bauer, F-93404 Saint-Ouen Cedex (FR)**

(72) Inventeur: **Baumard, René, Rue des Tramways, F-37270 Azay Sur Cher (FR)**
Inventeur: **Moulin, Bernard, 42 Avenue Gabrielle d'Estrées, F-37270 Montlouis S/Loire (FR)**
Inventeur: **Erckelboudt, André, 17 Allée des Cèdres, F-37270 Montlouis S/Loire (FR)**
Inventeur: **Robin, Rémi, 6, Square Francis Poulenc, F-37000 Tours (FR)**

(74) Mandataire: **Bouju, André, 38 Avenue de la Grande Armée, F-75017 Paris (FR)**

## Description

La présente invention concerne un procédé pour régler la tension et l'intensité du courant appliqué à un moteur électrique à courant continu relativement à une valeur de consigne prédéterminée en agissant sur l'alimentation du moteur.

L'invention concerne également un dispositif pour mettre en œuvre ce procédé.

On sait que la vitesse d'un tel moteur dépend de la tension d'alimentation et que son couple dépend de l'intensité. Dans le cas, particulièrement visé par l'invention, où le moteur est destiné à assurer, par l'intermédiaire d'une démultiplication convenable, le déplacement d'un organe mécanique tel qu'une porte, un organe de machine outil ou un chariot d'appareil de manutention, un double problème apparaît.

D'une part, il est nécessaire que la manoevre s'effectue sans à-coups, essentiellement en fin de course, et d'autre part, le blocage en fin de course ne doit pas provoquer de surintensité dans le moteur.

Pour résoudre ce problème de double réglage, il est connu d'utiliser une double boucle de régulation en chaîne fermée, l'une utilisant un comparateur d'intensités et l'autre un comparateur de tensions. Pour régler efficacement la vitesse du moteur, cette dernière chaîne comprend une dynamo tachymétrique calée sur l'arbre du moteur.

Cette solution est particulièrement lourde et onéreuse.

La présente invention vise à réaliser un procédé de double réglage de structure particulièrement simple.

Ce résultat est obtenu, conformément à l'invention, en effectuant les opérations suivantes:

a) on convertit la tension et l'intensité respectivement en deux grandeurs suivant une même échelle représentative,

b) on compare entre elles les deux grandeurs converties et l'on retient la plus grande,

c) on compare la grandeur retenue avec la valeur de consigne pour définir un signal d'écart un commandant un régulateur d'alimentation du moteur.

Grâce à cette disposition, on utilise une chaîne unique de régulation, où la grandeur à régler est soit l'intensité, soit la tension, la sélection s'effectuant par comparaison de ces deux grandeurs entre elles après leur conversion suivant une même échelle auxiliaire représentative.

Suivant un autre aspect de l'invention, le dispositif pour régler la tension et l'intensité du courant appliqué à un moteur électrique à courant continu comprend un régulateur à action proportionelle et intégrale pour commander un étage de commande de puissance de l'alimentation du moteur, et un étage d'élaboration d'une valeur de consigne relié au régulateur par l'intermédiaire d'un étage de comparaison. Il est caractérisé en ce qu'il comprend deux capteurs-transducteurs pour mesurer respectivement l'intensité et la tension du courant d'alimentation du moteur et les convertir en signaux suivant une même échelle représentative, et un étage de comparaison et de commutation pour sélectionner à sa sortie le plus grand de ces signaux, la sortie de cet étage étant reliée à l'étage de comparaison avec la valeur de consigne.

D'autres particularités et avantages de l'invention ressortiront encore de la description détaillée qui va suivre.

Aux dessins annexés, donnés à titre d'exemple non limitatif:

la figure 1 est schéma d'ensemble d'un dispositif de réglage conforme à l'invention;

la figure 2 est un schéma détaillé de l'étage de comparaison et de commutation;

la figure 3 est un schéma détaillé du régulateur;

la figure 4 est un schéma détaillé de l'oscillateur;

la figure 5 est un schéma montrant le signal émis par l'oscillateur;

la figure 6 est un schéma du comparateur;

la figure 7 est un schéma détaillé de l'étage de commande de puissance;

la figure 8 est un diagramme temporel servant à expliquer le fonctionnement du dispositif;

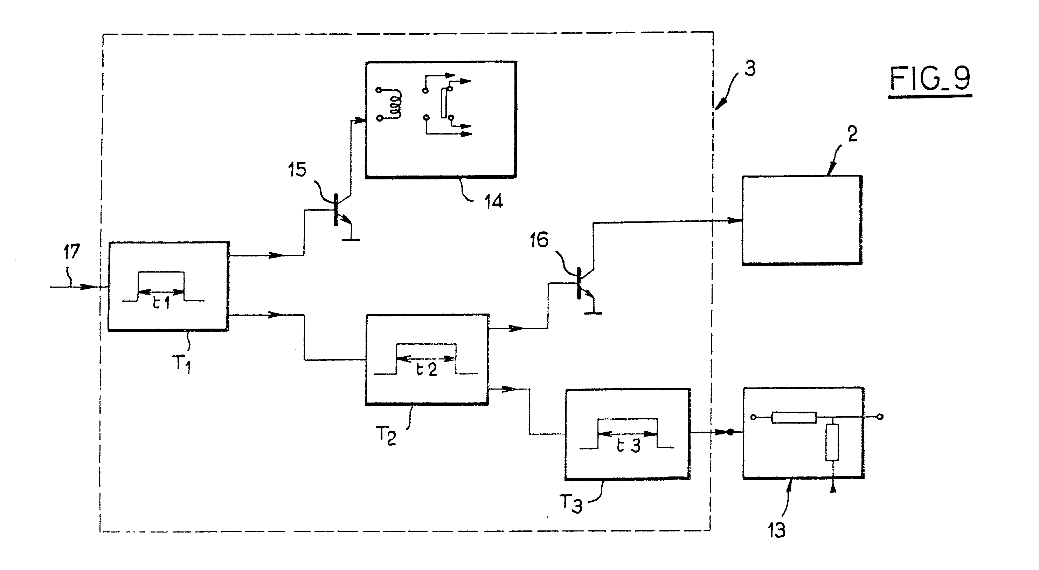

la figure 9 est un schéma détaillé de la logique de commande.

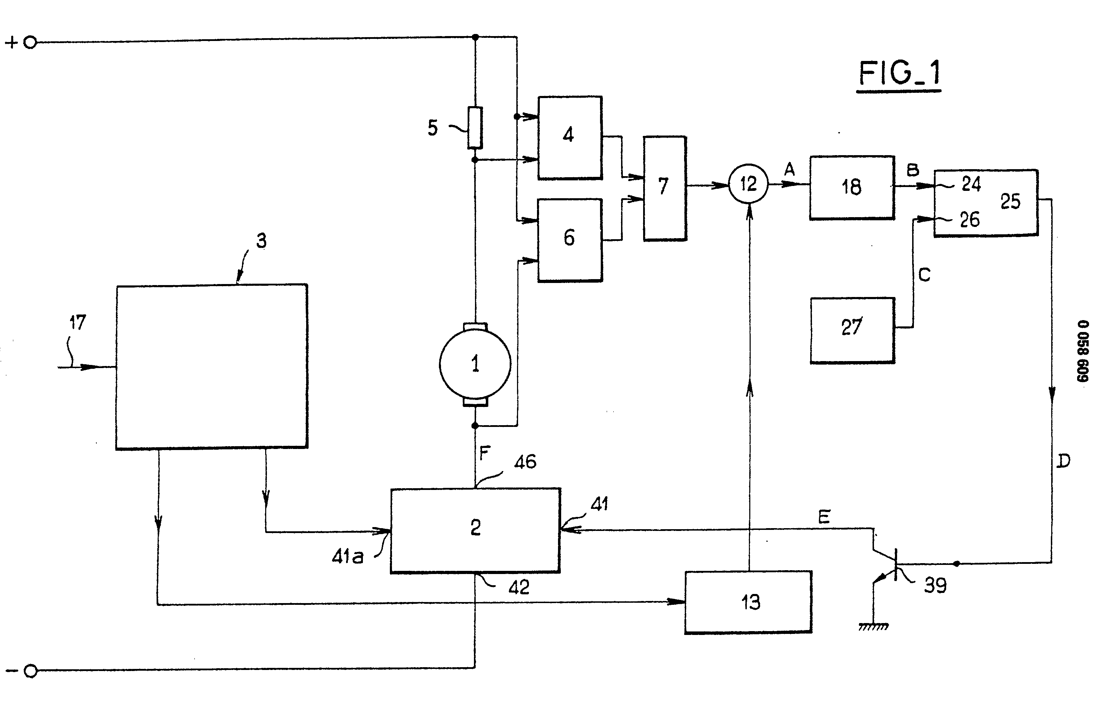

En référence à la figure 1, un moteur 1 est alimenté par une batterie (+, −) par l'intermédiaire d'un étage de commande de puissance 2. Cet étage est relié à une logique de commande 3 qui sera décrit plus loin.

Un capteur-transducteur d'intensité 4 est monté aux bornes d'une résistance 5 en série avec le moteur 1, et un capteur-transducteur de tension 6 est monté aux bornes de l'ensemble constitué par le moteur 1 et la résistance 5.

Ces capteurs-transducteurs sont agencés pour délivrer en sortie une tension représentative de la grandeur mesurée suivant une échelle de 6−12 V.

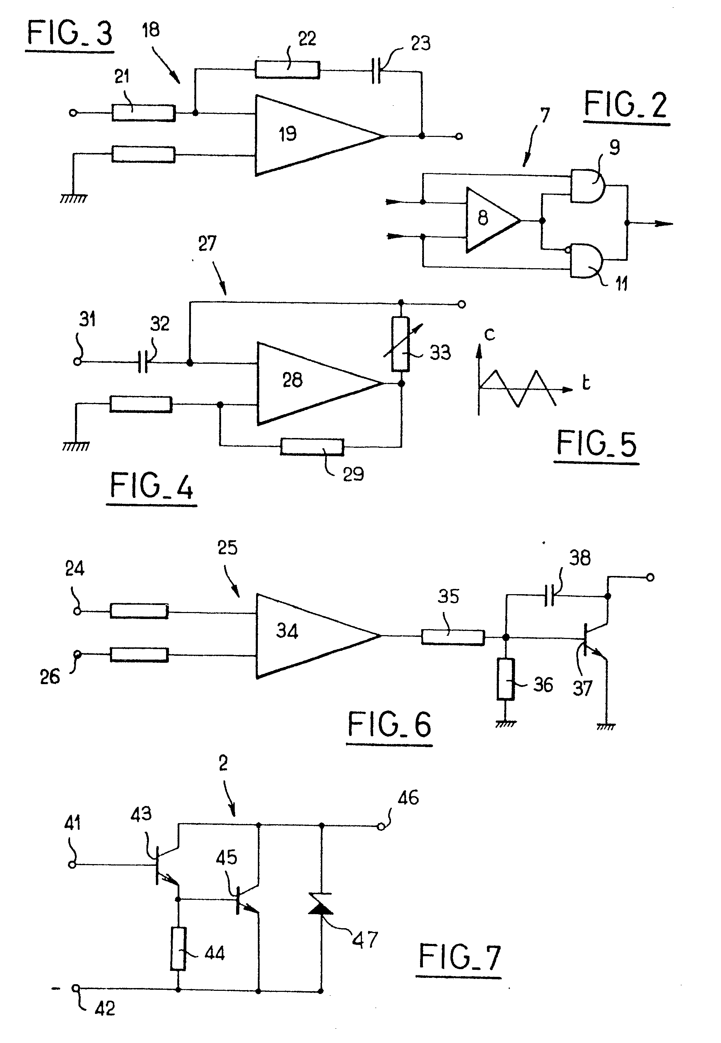

Les sorties des capteurs-transducteurs sont appliquées à l'entrée d'un étage 7 de comparaison et de sélection qui comprend un comparateur 8 (figure 2) recevant les deux signaux et délivrant un signal de niveau 1 si le signal d'intensité est plus grand que le signal de tension et un signal de niveau zéro dans le cas contraire. La sortie du comparateur 8 est reliée en parallèle à une entrée d'une porte ET9 recevant d'autre part le signal d'intensité et à une entrée inverseuse d'une porte ET11 recevant d'autre part le signal de tension. Les sorties de ces portes sont reliées en parallèle pour constituer la sortie de l'étage 7.

On comprend que le signal de sortie de l'étage 7 est le plus grand des deux signaux d'entrée.

Ce signal de sortie est appliqué à une entrée d'un étage de comparaison 12 dont une autre entrée est reliée à un étage 13 d'élaboration de valeur de consigne, de type potentiométrique lui-même relié à la logique de commande 3.

La logique de commande 3 comprend un premier étage de temporisation T1 recevant un signal 17 fourni par la position de l'organe mécanique déplacé par le moteur 1. Cet étage T1 attaque en parallèle un étage 14 définissant le sens de rotation du moteur 1 (par l'intermédiaire d'un transistor 15) et un second étage de temporisation T2. L'étage T2 attaque en parallèle une entrée 41a de l'étage de commande de puissance 2 (par l'intermediaire d'un transistor 16), et un troisième étage de temporisation T3 qui attaque en sortie l'étage 13 d'élaboration de la valeur de consigne. L'étage 13 comprend un montage potentiométrique alimenté sous 6V, de manière à matérialiser la valeur de consigne suivant une échelle 6—12V.

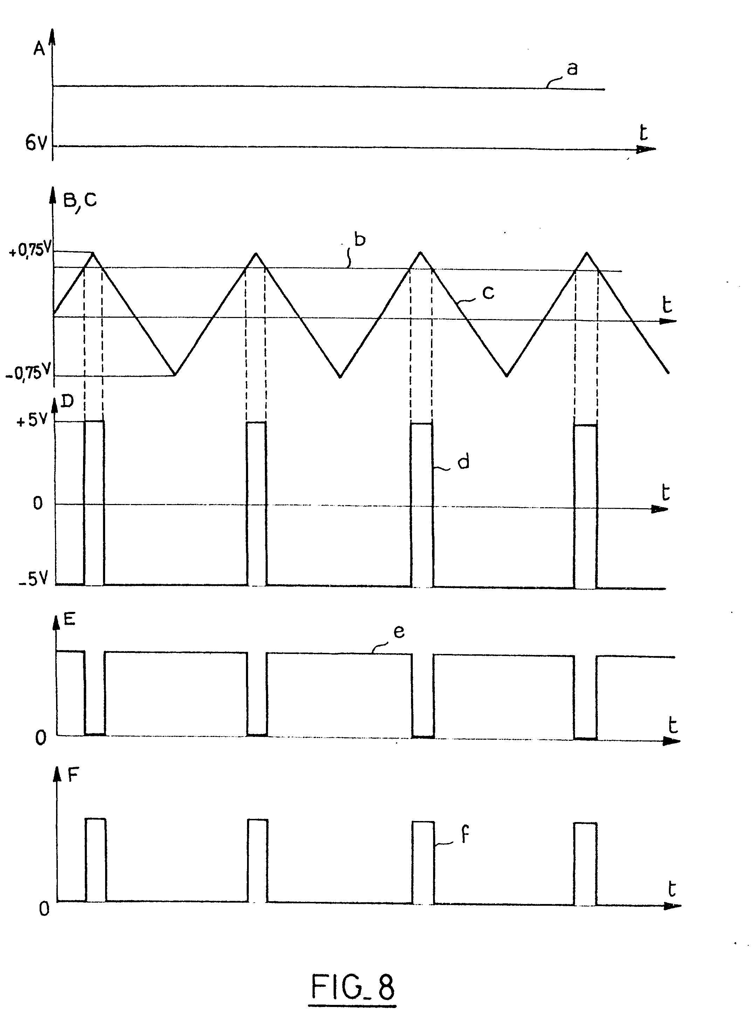

L'étage de comparaison 12, qui est en réalité un soustracteur, a sa sortie reliée à l'entrée d'un régulateur 18 à action proportionnelle et intégrale pour lui appliquer un signal d'écart A toujours matérialisé par une tension variant entre 6 et 12 V (figure 8, courbe a).

Le régulateur 18 comprend un amplificateur 19 attaqué par l'intermédiaire d'un résistance 21 et comportant une boucle de contre-réaction composée d'une résistance 22 en série avec un condensateur 23.

Le signal de sortie B du régulateur est proportionnel au signal d'écart par le jeu des résistances 21, 22 pour atténuer immédiatement les variations rapides de la grandeur à régler. Il s'y superpose, grâce au condensateur 23, une action proportionnelle à l'intégrale de l'écart par rapport au temps, qui tend à corriger les variations lentes.

Le régulateur 18 est construit de manière à délivrer un signal de sortie variant entre −0,75 V et +0,75 V quand le signal d'écart varie entre ses limites extrêmes.

La sortie du régulateur 18 est raccordée à une entrée 24 d'un comparateur 25 dont l'autre entrée 26 est raccordée à la sortie d'un oscillateur 27.

Cet oscillateur comprend un amplificateur 28 (figure 4) dont la sortie est reliée à l'entrée de référence par une boucle de contre-réaction comportant une résistance 29. L'entrée de signal 31 est reliée à l'autre entrée de l'amplificateur par l'intermédiaire d'un condensateur 32, et la sortie de l'amplificateur est branchée sur cette entrée par l'intermédiaire d'une résistance variable 33. Le signal de sortie est prélevé entre l'entrée de l'amplificateur et la résistance variable 33.

Par ce montage, on obtient en sortie de l'oscillateur un signal en dents de scie C (figure 5). Dans l'exemple décrit, l'amplitude de ce signal est de ±0,75 V (figure 8, courbe c) et sa fréquence est de 1 kHz.

Le comparateur 25 (figure 6) comprend un amplificateur 34 dont la sortie, par l'intermédiaire d'un diviseur de tension composé de deux résistances 35, 36, attaque en parallèle la base d'un transistor 37 monté en émetteur commun et son collecteur par l'intermédiaire d'un condensateur 38. Ce montage permet d'obtenir en sortie un signal D de 5 V, positiv ou négatif suivant que, respectivement, le signal en dents de scie C est supérieur ou inférieur au signal de sortie B du régulateur 18 (figure 8, courbe d).

Ce signal est appliqué sur la base d'un transistor 39 monté en émetteur commun qui délivre sur son collecteur un signal E inversé et redressé (figure 8, courbe e).

Le signal E est appliqué à une entrée 41 de l'étage de commande de puissance 2 dont une autre entrée 42 est reliée au pôle négatif de la batterie.

L'entrée 41 est reliée à la base d'un transistor 43 dont l'émetteur est relié d'une part au — par l'intermédiaire d'une résistance 44 et d'autre part à la base d'un transistor 45 dont l'émetteur est au —. Les collecteurs des deux transistors sont réunis sur la sortie 46 de l'étage 2, et une diode Zener 47 relie cette sortie au —.

Ce montage permet d'obtenir en sortie une tension F découpée (figure 8, courbe f) servant à l'alimentation du moteur.

En réalité, l'entrée 41 est la même que l'entrée 41 a, sur laquelle viennent donc se superposer le signal émis par la logique de commande 3 et le signal haché E.

Dans l'exemple décrit, le dipositif permet, par découpage, d'alimenter le moteur 1 en marche normale à vitesse maximale sous une tension de 57 V à partir d'une batterie de 72 V.

En fonctionnement, le moteur 1 est mis en route à partir de la logique de commande 3. Après une temporisation t1, définie par l'étage T1, le sens de rotation du moteur est défini par l'étage 14. Puis, après une nouvelle temporisation t2 définie par l'étage T2, l'étage 2 de commande de puissance est actionné. Enfin, après une dernière temporisation t3, définie par l'étage T3, la valeur de consigne est élaborée.

En cours de foncionnement du moteur, si l'intensité vient à augmenter par exemple sous l'effet d'un blocage, l'étage de comparaison et de commutation 7 sélectionne cette grandeur comme grandeur à régler et l'étage de comparaison 12 délivre le signal d'écart A. Le régulateur 18 délivre une action B d'autant plus élevée que le signal d'écart est grand. Plus cette action B est forte et plus la période pendant laquelle elle est inférieure au signal en dents de scie est brève (figure 8), ce qui a pour effet d'abréger la durée des impulsions du signal D et finalement de réduire les périodes de passage du courant dans le moteur par rapport à des périodes d'interruption.

La grandeur réglée peut également être la tension appliquée au moteur. En particulier, quand l'organe mécanique déplacé par le moteur approche de sa fin course, le signal 17 appliqué au boîtier de télécommande provoque l'abaissement de la valeur de consigne et le régulateur agit dans le sens d'une diminution de la tension appliquée au moteur, donc d'une réduction de sa vitesse.

Bien entendu, l'invention n'est pas limitée à l'exemple décrit mais couvre toute variante restant dans le cadre des revendications, notamment en ce qui concerne la constitution des circuits électriques.

## Revendications

1. Procédé pour régler la tension et l'intensité du courant appliqué à un moteur électrique à courant continu (1) relativement à une valeur de consigne prédéterminée en agissant sur l'alimentation du moteur (1), caractérisé en ce qu'on effectue les opérations suivantes:

a) on convertit la tension et l'intensité respectivement en deux grandeurs suivant une même échelle représentative,

b) on compare entre elles les deux grandeurs converties et l'on retient la plus grande,

c) on compare la grandeur retenue avec la valeur de consigne pour définir un signal d'écart commandant un régulateur d'alimentation du moteur (1).

2. Dispositif pour régler la tension et l'intensité du courant appliqué à un moteur électrique (1) à courant continu, comprenant un régulateur (18) à action proportionelle et intégrale pour commander un étage (2) de commande de puissance de l'alimentation du moteur (1), et un étage (13) d'élaboration d'une valeur de consigne relié au régulateur (18) par l'intermédiaire d'un étage (12) de comparaison, caractérisé en ce qu'il comprend deux capteurs-transducteurs (4, 6) pour mesurer respectivement l'intensité et la tension du courant d'alimentation du moteur (1) et les convertir en signaux suivant une même échelle représentative, et un étage (7) de comparaison et de commutation pour sélectionner à sa sortie le plus grand de ces signaux, la sortie de cet étage (7) étant reliée à l'étage (12) de comparaison avec la valeur de consigne.

3. Dispositif conforme à la revendication 2, caractérisé en ce qu'il comprend (25) dont les entrées (24, 26) sont reliées aux sorties respectives du régulateur (18) et d'un générateur (27) d'oscillations isochrones, et dont la sortie est reliée à l'étage de commande de puissance (2).

4. Dispositif conforme à la revendication 3, caractérisé en ce que le générateur d'oscillations (27) est agencé pour engendrer des oscillations en dents de scie (C).

5. Dispositif conforme à l'une des revendications 2 à 4, caractérisé en ce qu'il comprend une logique de commande (3) reliée à l'étage (13) d'élaboration de la valeur de consigne et à l'étage (2) de commande de puissance.

6. Dispositif conforme à la revendication 5, caractérisé en ce que logique de commande (3) comprend une entrée pour un signal (17) de programmation de la valeur de consigne, ce signal dépendant de la position d'un organe mécanique actionné par le moteur (1).

## Patentansprüche

1. Verfahren zum Regeln der Spannung und Stärke des einem elektrischen Gleichstrommotor (1) zugeführten Stromes relativ zu einem vorbestimmten Sollwert durch Einwirken auf die Stromversorgung des Motors (1), dadurch gekennzeichnet, daß die folgenden Operationen durchgeführt werden:

a) die Spannung und die Spannung und die Stromstärke werden nach demselben Repräsentativmaßstab in zwei Größen umgesetzt,

b) die beiden umgesetzten Größen werden miteinander verglichen, und die größere wird aufbewahrt,

c) die aufbewahrte Größe wird mit dem Sollwert verglichen, um ein Fehlersignal zu bilden, das einen Stromversorgungsregler des Motors (1) steuert.

2. Vorrichtung zum Regeln der Spannung und der Stärke des einem elektrischen Gleichstrommotor (1) zugeführten Stromes, mit einem integrierenden Proportionalregler (18) zur Steuerung einer Leistungssteuerstufe (2) der Stromversorgung des Motors (1) und einer Sollwerterzeugerstufe (13), die mit dem Regler (18) über eine Vergleicherstufe (12) verbunden ist, dadurch gekennzeichnet, daß sie zwei Aufnehmer-Wandler (4, 6) zum Messen der Stromstärke bzw. Spannung des Versorgungsstromes für den Motor (1) und zum Umsetzen derselben in Signale nach demselben Repräsentativmaßstab sowie eine Vergleicher- und Umschaltstufe (7) zum Auswählen des größeren dieser beiden Signale an ihrem Ausgang umfaßt, wobei der Ausgang dieser Stufe (7) mit der Vergleicherstufe (12) zum Vergleichen mit dem Sollwert verbunden ist.

3. Vorrichtung nach Anspruch 2, dadurch gekennzeichnet, daß sie einen Vergleicher (25) umfaßt, dessen Eingänge (24, 26) mit dem Ausgang des Reglers (18) bzw. mit dem Ausgang eines isochrone Schwingungen erzeugenden Generators (27) verbunden sind und dessen Ausgang mit der Leistungssteuerstufe (2) verbunden ist.

4. Vorrichtung nach Anspruch 3, dadurch gekennzeichnet, daß der Schwingungsgenerator (27) derart ausgebildet ist, daß er Sägezahnschwingungen (C) erzeugt.

5. Vorrichtung nach einem der Ansprüche 2 bis 4, dadurch gekennzeichnet, daß sie eine Steuerlogik (3) umfaßt, die mit der Sollwerterzeugerstufe (13) und mit der Leistungssteuerstufe (2) verbunden ist.

6. Vorrichtung nach Anspruch 5, dadurch gekennzeichnet, daß die Steuerlogik (3) einen Eingang für ein Sollwert-Programmiersignal (17) aufweist, das von der Stellung eines durch den Motor (1) betätigten mechanischen Organs abhängt.

## Claims

1. Method for regulating the voltage and current intensity applied to a direct-current electric motor (1) with respect to a predetermined reference value by modifying the supply to the motor (1), characterized in that the following operations are performed:

a) the voltage and current intensity are converted respectively into two quantities in accordance with one and the same representative scale,
b) the two converted quantities are compared with each other and the larger quantity is retained,
c) the quantity retained is compared with the reference value in order to define a difference signal which controls a regulator for the supply of the motor (1).

2. Device for regulating the voltage and current intensity applied to a direct-current electric motor (1), comprising a regulator (18) having proportional and integral action for controlling a stage (2) which controls the power supplied to the motor (1) and a stage (13) for producing a reference value which is connected to the regulator (18) through a comparison stage (12), characterized in that it comprises two transducer-type sensors (4, 6) for measuring respectively the current intensity and the voltage supplied to the motor (1) and converting them to signals in accordance with one and the same representative scale, and a comparison and switching stage (7) for selecting at its output the signal having the highest value, the output of this stage (7) being connected to the stage (12) for comparison with the reference value.

3. Device in accordance with claim 2, characterized in that it comprises a comparator (25), the inputs (24, 26) of which are connected to the respective outputs of the regulator (18) and a generator (27) for producing isochronous oscillations and the output of which is connected to the power control stage (2).

4. Device in accordance with claim 3, characterized in that the oscillation generator (27) is adapted to generate sawtooth oscillations (C).

5. Device in accordance with any one of claims 2 to 4, characterized in that it comprises a control logic unit (3) connected to the reference-value generating stage (13) and to the power control stage (2).

6. Device in accordance with claim 5, characterized in that the control logic unit (3) has an input for a reference-value programming signal (17), this signal being dependent on the position of a mechanical element actuated by the motor (1).

FIG_1

FIG_3

FIG_2

FIG_4

FIG_5

FIG_6

FIG_7

9

FIG_8

FIG_9